# EUROPÄISCHE PATENTSCHRIFT

(11) **EP 0 817 514 B1**
(45) Veröffentlichungstag und Bekanntmachung des Hinweises auf die Patenterteilung: **19.11.2003**
(21) Anmeldenummer: 97401352.6
(22) Anmeldetag: 13.06.1997
(51) Int. Cl.: H04Q 7/24, H04Q 7/30

(54) **Zellulares Funksystem**
Cellular radio system
Système radio cellulaire

(30) Priorität: 28.06.1996 DE 19625814
(43) Veröffentlichungstag der Anmeldung: 07.01.1998
(73) Patentinhaber: ALCATEL, 75008 Paris (FR)
(72) Erfinder: Werbus, Volker, 82205 Gilching (DE)
(74) Vertreter: Rausch, Gabriele, Dr.

(56) Entgegenhaltungen:
- EP-A- 0 374 787
- EP-A- 0 661 895
- WO-A-95/03663

## Beschreibung

Die Erfindung betrifft ein zellulares Funksystem, welches aus bestehenden Einrichtungen, die vermittlungstechnische Funktionen ausführen und aus Basisstationen und schnurlosen Endgeräten aufgebaut ist.

Ein solches System ist beispielsweise aus EP 0 661 895 A1 bekannt. Solche Systeme stellen häufig auch eine Vielzahl von Leistungsmerkmalen bereit.

Desgleichen offenbart EP 0 374 787 ein Funktelefonsystem in Form einer Nebenstellenanlage, welche mit einander in Verbindung stehende Funkbasiselemente beinhaltet.

Aus dem Stand der Technik sind bereits zellulare Mobilfunknetze bekannt, die den Fernsprechdienst drahtgebundener Netze auf mobile Teilnehmer ausdehnen. Die Fernsprechsysteme mit sogenannten schnurlosen Telefonen haben insbesondere für den Einsatz im privaten Bereich eine große Bedeutung. Mit dem allgemein bekannten GSM-Netz wird das Diensteangebot des eingeführten ISDN-Netzes auf den mobilen Bereich erweitert. Dieses Netz ist auf hohe Kompatibilität mit dem ISDN-Netz ausgelegt.

Die weiteren landesweiten Mobilfunksysteme, die eine Ausweitung des Diensteangebotes bestehender Drahtnetze auf den Funkbereich ermöglichen, werden im folgenden genauer beschrieben. Schnurlose Telefone bieten einen Dienst, der vor allem im Bereich des Teilnehmerhauptanschlusses verfügbar ist. Er ermöglicht es, das Fernsprechendgerät, statt über ein Kabel über Funk bis zu 300 m außerhalb des Hauses oder 50 m innerhalb des Hauses mit einer Feststation zu verbinden. Dafür werden die Feststation und das Fernsprechendgerät als Mobilteil je mit einer Sende- und Empfangseinrichtung ausgestattet. Der jetzige DECT-(Digital Enhanced Cordless Telecommunications) Standard beschreibt die Protokolle in einem schnurlosen Telekommunikationssystem für Sprach- und Datenübertragung. Dieses System ist auch für den breiten Einsatz bei Nebenstellenanlagen von Interesse. In dem DECT-Standard ist keine Mobilitätsverwaltung vorgesehen. Der Teilnehmer wird vorwiegend innerhalb von Gebäuden versorgt, während in multizellularen Netzen, wie beispielsweise dem GSM-Netz, die Teilnehmer überwiegend außerhalb von Gebäuden erreicht werden. Bei DECT-Installationen sind mehrere Ausbaustufen bekannt. Es gibt sogenannte Ein-Zellen-Systeme, in denen der Versorgungsbereich mit nur einer Feststation abgedeckt wird. Auf Grund der festgelegten geringen Sendeleistung und der hohen Dämpfung innerhalb von Gebäuden, sind Ein-Zellen-Systeme für den privaten hausinternen Gebrauch gedacht.

Mehr-Zellen-Systeme erlauben den DECT-Dienst auf größeren Flächen, wie z.B. in einem oder mehreren Gebäuden innerhalb eines privaten Firmengeländes (aus: "Mobile Datenkommunikation-Eine Übersicht"; von: B. Walke et al; it+ti 5/93 Informationstechnik und Technische Informatik 35 (1993) 5; Seiten 12 bis 25).

Die zuvor genannten Mehr-Zellen-Systeme bedürfen aber eines Controllers zur Anschaltung der verschiedenen Basisstationen an eine TK-Anlage, da wie bereits erwähnt, im DECT-Standard keine Mobilitätsverwaltung vorgesehen ist. Auch bei Anschaltung direkt an ein Netz muß eine Logikschaltung davorgeschaltet werden.

Dies bedeutet also einen zusätzlichen Aufwand bei der Installation eines zellularen Funksystems an eine bestehende Telekommunikationsanlage oder an ein bestehendes Telekommunikationsnetz.
Demgemäß ist es Aufgabe der vorliegenden Erfindung ein zellulares Funksystem dergestalt zu schaffen, daß eine Realisierung mit einer bestehenden Telekommunikationseinrichtung möglich ist, ohne darin wesentliche Änderungen durchzuführen.

Dies wird erfindungsgemäß gelöst durch die Lehre des Anspruchs 1.

Vorteilhaft erweist sich hierbei, daß trotz reduzierter Kosten ein zellulares Netz aufgebaut werden kann, ohne daß große Änderungen bei der Neuinstallation in der Anlage vorzunehmen sind.

Weiterhin vorteilhaft ist, daß eine Reichweitenerweiterung mit sehr kostengünstigen Mitteln zu erreichen ist.

Weitere vorteilhafte Ausgestaltungen sind den Ansprüchen 2 bis 5 zu entnehmen.

Im folgendem wird die Erfindung anhand von Ausführungsbeispielen und anhand der Figuren näher erläutert.

Die Figuren zeigen:
Fig. 1 eine schematische Darstellung eines zellularen Funksystems mit Anbindung an ein Telekommunikationsnetz,
Fig. 2 eine schematische Darstellung eines zellularen Funksystems mit Anbindung an eine Telekommunikationsanlage.

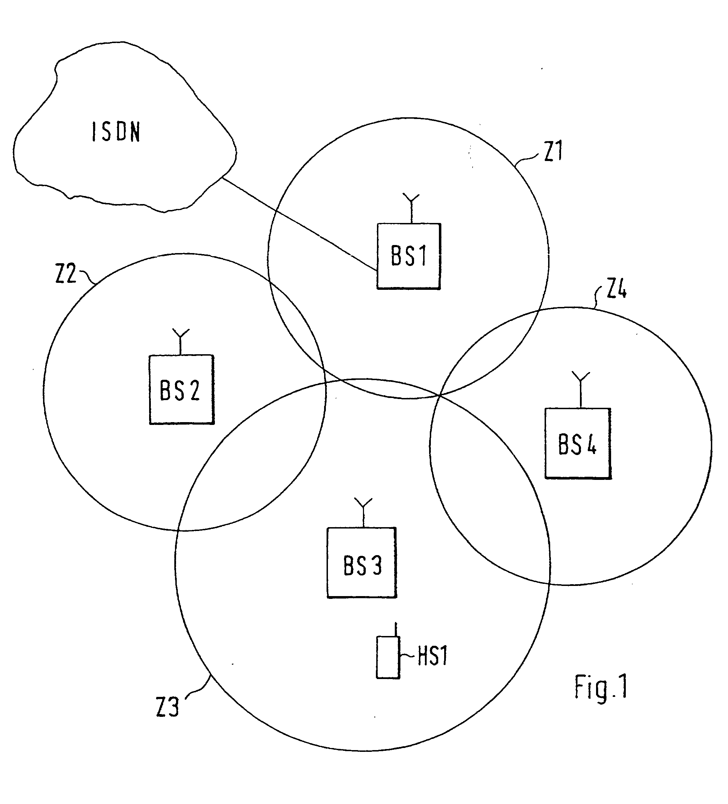

Zunächst wird die Erfindung anhand von Figur 1 näher erläutert.

Gemäß Fig. 1 besteht ein zellulares Funksystem aus einer Einrichtung ISDN, die vermittlungstechnische Funktionen ausführt und die eine Vielzahl von Leistungsmerkmalen bereitstellt.

Als Einrichtung wird das ISDN-Netz, ein digitales Festnetz, gewählt. Das zellulare Funksystem weist desweiteren eine Vielzahl von Basisstationen BS1, BS2, BS3, BS4 auf.

Jeder Basisstation sind jeweils schnurlose Endgeräte zugeordnet. Hierbei ist aus Übersichtsgründen lediglich ein schnurloses Endgerät HS1 gezeichnet worden, welches der ersten Basisstation BS1 zugeordnet ist. Aus der Vielzahl von Basisstationen BS1, BS2, BS3, BS4 ist mindestens eine der Basisstationen, hier die Basisstation BS1, mit der Einrichtung ISDN verbunden. In dem hier vorliegenden Ausführungsbeispiel ist die Basisstation BS1 mit dem ISDN-Netz verbunden. Jede Basisstation versorgt eine Zelle Z1, Z2, Z3, Z4, innerhalb derer ein schnurloses Endgerät über einen Funkkanal auf die entsprechende Basisstation zugegreifen kann. Innerhalb dieser Zelle ist ein schnurloses Endgerät entsprechend seiner Zuordnung zu seiner Basisstation ohne weiteres auffindbar. Dies bedeutet in dem hier vorliegenden Fall, daß das schnurlose Endgerät HS1 im Bereich der Zelle Z1 der Basisstation BS1 registriert ist und auch dort auffindbar ist. Jede der Basisstationen BS1, BS2, BS3, BS4 stellt eine Vielzahl von Funkkanälen bereit.

In dem vorliegenden Ausführungsbeispiel ist eine erste Basisstation BS1 benachbart zu jeder weiteren Basisstation BS2, BS3, BS4 angeordnet. Das heißt, daß die von der Basisstation BS1 versorgte und somit aufgespannte Zelle Z1 benachbart oder überlappend zu den anderen aufgespannten Zellen Z2, Z3, oder Z4 angeordnet ist. In dem hier vorliegenden Beispiel soll die Basisstation eine Basisstation eines DECT-Netzes sein. Bei einem DECT-Netz stellt jede Basisstation 12 Funkkanäle zur Verfügung. Für die Verbindung von benachbarten Basisstationen untereinander wird ein Funkkanal einer ersten Basisstation genommen, über den dann eine Signalisierung zur nächsten Basisstation erfolgt. Mittels der Verbindung zwischen den benachbarten Basisstationen kann demgemäß ein schnurloses Endgerät auch über solche Basisstationen, denen es nicht zugeordnet ist, auf die Einrichtung ISDN zugreifen. Damit ergeben sich einige vorteilhafte Anwendungen, wie im folgenden beschrieben wird.

Über ein öffentliches Netz, z.B. das ISDN-Netz, kommt ein Gespräch für einen Teilnehmer an. Da zwischen dem ISDN-Netz und einer ersten Basisstation BS1 eine Festverbindung besteht, werden ankommende Gespräche immer zur Basisstation BS1, welche die Zelle Z1 aufspannt, geführt. Dieser Basisstation BS1 ist ein schnurloses Endgerät HS1 zugeordnet.

Für den Fall, daß sich dieses schnurlose Endgerät HS1 nicht im Bereich der Zelle Z1 der Basisstation BS1 befindet, wird mit einem von der Basisstation BS1 bereitgestellten und gleichzeitig freien Funkkanal eine Verbindung zu einer weiteren Basisstation, hier beispielsweise der zweiten Basisstation BS2, aufgebaut. Über diese Verbindung wird die von dieser zweiten Basisstation BS2 versorgte Zelle Z2 nach dem Vorhandensein des schnurlosen Endgerätes HS1 durchsucht. Befindet sich das schnurlose Endgerät HS1 nicht im Bereich dieser Zelle Z2, so wird die Verbindung wieder abgebrochen, und über einen Funkkanal wird von der Basisstation BS1 eine Verbindung zu der nächsten benachbarten Basisstation BS3 hergestellt.

In dem hier beschriebenen Fall befindet sich das schnurlose Endgerät HS1 im Bereich der Basisstation BS3. Das schnurlose Endgerät HS1, das im Bereich der Zelle Z3 gefunden wurde, wird nun über die Basisstation BS3 und die Basisstation BS1 mit dem ISDN-Netz verbunden. Das ankommende Gespräch kann somit an das schnurlose Endgerät HS1 weitergeführt werden.

Ein ähnlicher Vorgang erfolgt bei einem abgehenden Ruf. Ein Teilnehmer mit einem Handset HS1 wünscht ein Gespräch zu führen. Er befindet sich aber im Bereich der Basisstation BS3. Demgemäß wird von dem Handset HS1 ein Funkkanal zur Basisstation BS3 aufgebaut. Die Basisstation BS3, die selbst keine Verbindung zu dem ISDN-Netz hat, baut eine Verbindung zu der Basisstation BS1 auf, die, wie bereits zuvor erläutert, eine Verbindung zu dem ISDN-Netz bereitstellt.

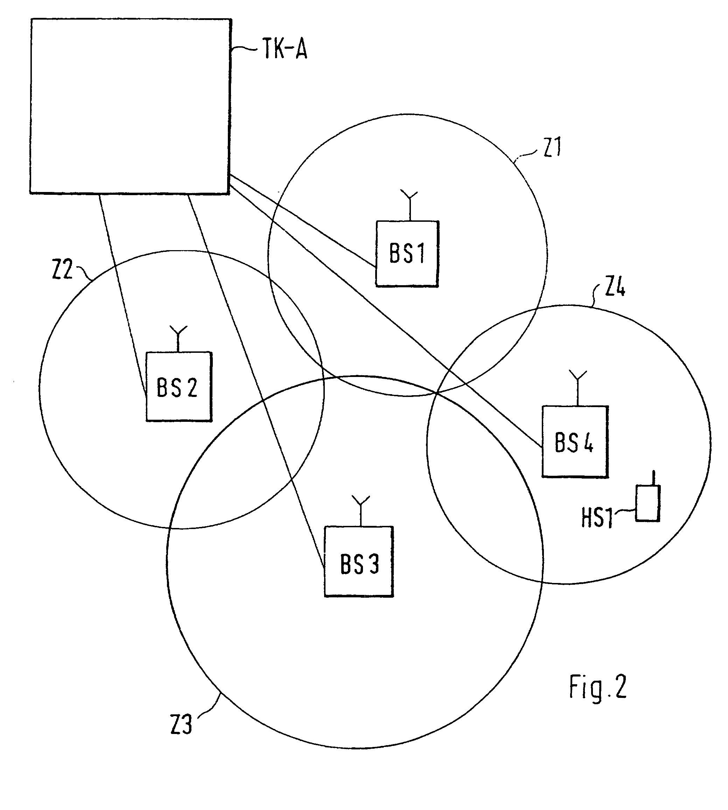

Im folgenden wird anhand von Figur 2 ein weiteres Ausführungsbeispiel näher erläutert. Es wird beschrieben, wie ein zellulares Funksystem bei Anbindung an eine Telekommunikationsanlage TK-A aussieht. Gemäß Fig. 2 ist jede der Basisstationen BS1, BS2, BS3 und BS4 mit der Telekommunikationsanlage TK-A verbunden. Ein schnurloses Endgerät HS1, welches hier nur beispielhaft gezeichnet wurde, ist einer ersten Basisstation BS1 zugeordnet. Jede der Basisstationen versorgt eine Zelle Z1, Z2, Z3, Z4. Das schnurlose Endgerät HS1 befindet sich im Bereich der von der vierten Basisstation BS4 versorgten Zelle Z 4. Für den Fall eines ankommenden Rufes wird das schnurlose Endgerät HS1 zuerst in der Zelle gesucht, in der es sich gemäß seiner Zuordnung befinden müßte. Dies ist hier die Zelle 1 Z1 der ersten Basisstation BS1. In dieser Zelle Z1 wird das schnurlose Endgerät HS1 nicht gefunden. Somit wird von der ersten Basisstation BS1 ein Funkkanal zu einer benachbarten Basisstation, hier beispielsweise der zweiten Basisstation BS2 aufgebaut. Im Bereich der zweiten Basisstation BS2 wird das schnurlose Endgerät HS1 jedoch nicht aufgefunden. Deshalb wird ein neuer Funkkanal zu der dritten Basisstation BS3 aufgebaut, in der sich das schnurlose Endgerät HS1 aber auch nicht befindet. Daraufhin wird ein Funkkanal zu der nächsten Basisstation, hier der vierten Basisstation BS4, aufgebaut. In deren Bereich befindet sich das schnurlose Endgerät HS1. Im Bereich dieser vierten Basisstation BS4 wird ein von der TelekommunikationsanlageTK-A bereitgestelltes Leistungsmerkmal genutzt. Dieses Leistungsmerkmal ist in diesem Fall das "Heranholen" eines Gespräches. Damit wird bewirkt, daß das in der ersten Basisstation BS1 ankommende Gespräch zu der vierten Basisstation BS4 herangeholt wird. Somit kann das schnurlose Endgerät HS1 über die vierte Basisstation BS4 ein Gespräch führen. Dem schnurlosen Endgerät HS1 wird dazu temporär eine Nummer aus der Zelle Z4 zugewiesen.

Ein ähnlicher Vorgang läuft bei abgehenden Gesprächen ab. Das schnurlose Endgerät HS1 das der ersten Basisstation BS1 zugeordnet ist, befindet sich im Bereich der Zelle Z4 der vierten Basisstation BS4. Von dem schnurlosen Endgerät HS1 soll ein Gespräch aufgebaut werden. Von der vierten Basisstation BS4 wird erkannt, daß es sich um ein schnurloses Endgerät HS1 einer anderen Zelle,nämlich um ein schnurloses Endgerät HS1 aus der Zelle Z1 handelt.

Eine Telekommunikationsanlage TK-A stellt nun ein Leistungsmerkmal unter dem Namen "Follow - me" bereit. Das heißt, ein schnurloses Endgerät HS1 ist in der Lage, auch von benachbarten Basisstationen aus, einen Ruf wie von der eigenen ersten Basisstation BS1 abzusetzen.

Im folgenden soll erläutert werden, daß ein Handover, wie dies bei bekannten zellularen Funksystemen der Fall ist, auch bei der erfindungsgemäßen zellularen Funkstruktur erfolgen kann. Ein Teilnehmer führt ein Gespräch über ein schnurloses Endgerät im Bereich einer Basisstation. Das schnurlose Endgerät befindet sich z.B. im Bereich der Basisstation, der es fest zugeordnet ist. Nun kann der Fall auftreten, daß sich ein Teilnehmer mit dem schnurlosen Endgerät aus dem Bereich der von der Basisstation aufgespannten Zelle herausbewegt. Dazu muß ein sogenanntes Handover von dem Endgerät aus initiiert werden. Für diesen Vorgang wird von dem Endgerät eine Verbindung zu der benachbarten Zelle bzw. zu deren Basisstation aufgebaut. Diese benachbarte Basisstation wiederum baut eine Verbindung zu der vorherigen Basisstation auf und teilt dieser alle notwendigen Handover-Parameter mit. Nach erfolgreichem Aufbau dieser Verbindung sendet die Basisstation ein "Ready for Handover" an das schnurlose Endgerät. Die Verbindung zum schnurlosen Endgerät der ursprünglichen Basisstation wird aufgelöst und das Gespräch wird nun in der weiteren Zelle über die weitere Basisstation weitergeführt.

In der hier vorgestellten Erfindung werden zwar eine Vielzahl von Funkkanälen benötigt, jedoch ist dies kein Problem, da bei DECT-Basisstationen jeweils 12 Funkkanäle zur Verfügung gestellt werden.

## Patentansprüche

1. Zellulares Funksystem
- mit einer Einrichtung (TK-A; ISDN), die vermittlungstechnische Funktionen ausführt und
- mit einer Vielzahl von Basisstationen (BS1, BS2, BS3, BS4), denen jeweils schnurlose Endgeräte (HS1) zugeordnet sind, und von denen mindestens eine Basisstation mit der Einrichtung (TK-A; ISDN) verbunden ist,
- bei dem jede Basisstation (BS1, BS2, BS3, BS4) eine Vielzahl von Funkkanälen bereitstellt,
- **dadurch gekennzeichnet, daß** die Basisstationen (BS1, BS2, BS3, BS4) derart ausgestaltet sind, daß für den Fall, daß sich ein schnurloses Endgerät (HS1) nicht im Bereich einer von seiner zugeordneten Basisstation aufgespannten Zelle befindet, von seiner zugeordneten Basisstation eine Verbindung zu einer benachbarten Basisstation (BS1, BS2, BS3, BS4) über einen der bereitgestellten Funkkanäle aufgebaut wird, um über Basisstationen, denen das schnurlose Endgerät (HS1) nicht zugeordnet ist, auf die Einrichtung (TK-A; ISDN) zuzugreifen.

2. Zellulares Funksystem nach Anspruch 1, **dadurch gekennzeichnet, daß** über die Verbindung zu benachbarten Basisstationen (BS1, BS2, BS3, BS4) eine Verbindung mit der Einrichtung (TK-A; ISDN) hergestellt wird.

3. Zellulares Funksystem nach Anspruch 1 oder 2, **dadurch gekennzeichnet, daß** die Einrichtung (TK-A; ISDN) eine Telekommunikationsnebenstellenanlage ist.

4. Zellulares Funksystem nach Anspruch 1 oder 2, **dadurch gekennzeichnet, daß** die Einrichtung (TK-A; ISDN) eine Schnittstellenschaltungsanordnung zu einem ISDN Netz ist.

5. Zellulares Funksystem nach einem der Ansprüche 1 bis 4, **dadurch gekennzeichnet, daß** die Basisstationen (BS1, BS2, BS3, BS4) Basisstationen einer DECT-Anlage sind.

6. Zellulares Funksystem nach einem der Ansprüche 1 bis 5, **dadurch gekennzeichnet, daß** die Einrichtung (TK-A; ISDN) eine Vielzahl von Leistungsmerkmalen bereitstellt.

## Claims

1. Cellular radio system
- with a facility (TK-A; ISDN) which carries out switching functions, and
- with multiple base stations (BS1, BS2, BS3, BS4), to each of which cordless terminals (HS1) are assigned, and of which at least one base station is connected to the facility (TK-A; ISDN),
- in which each base station (BS1, BS2, BS3, BS4) provides multiple radio channels,
**characterized in that** the base stations (BS1, BS2, BS3, BS4) are in such a form that for the case that a cordless terminal (HS1) is not in the area of a cell which is fixed by its assigned base stations, a connection is set up from its assigned base station to an adjacent base station (BS1, BS2, BS3, BS4) via one of the provided radio channels, to access the facility (TK-A; ISDN) via base stations to which the cordless terminal (HS1) is not assigned.

2. Cellular radio system according to Claim 1, **characterized in that** a connection to the facility (TK-A; ISDN) is made via the connection to adjacent base stations (BS1, BS2, BS3, BS4).

3. Cellular radio system according to Claim 1 or 2, **characterized in that** the facility (TK-A; ISDN) is a private digital exchange.

4. Cellular radio system according to Claim 1 or 2, **characterized in that** the facility (TK-A; ISDN) is an interface circuit arrangement to an ISDN network.

5. Cellular radio system according to one of Claims 1 to 4, **characterized in that** the base stations (BS1, BS2, BS3, BS4) are base stations of a DECT system.

6. Cellular radio system according to one of Claims 1 to 5, **characterized in that** the facility (TK-A; ISDN) provides numerous service features.

## Revendications

1. Système radio cellulaire,
- comprenant une installation (TK-A ; ISDN) qui exécute des fonctions à la communication et
- une pluralité de stations de base (BS1, BS2, BS3, BS4) auxquelles sont associés respectivement des terminaux sans fil (HS1) et dont au moins une station de base est reliée à l'installation (TK-A ; ISDN),
- dans lequel chaque station de base (BS1, BS2, BS3, BS4) prévoit une pluralité de canaux radio,
**caractérisé en ce que** les stations de base (BS1, BS2, BS3, BS4) sont équipées de telle sorte qu'au cas où un terminal sans fil (HS1) ne se trouverait pas dans la zone d'une cellule ouverte par sa station de base associée, une communication avec une station de base voisine (BS1, BS2, BS3, BS4) est établie par sa station de base associée par l'intermédiaire d'un des canaux radio prévus afin d'accéder à l'installation (TK-A ; ISDN) à travers des stations de base auxquelles le terminal sans fil (HS1) n'est pas associé.

2. Système radio cellulaire selon la revendication 1, **caractérisé en ce qu'**une communication avec l'installation (TK-A ; ISDN) est établie par l'intermédiaire de la communication avec des stations de base voisines (BS1, BS2, BS3, BS4).

3. Système radio cellulaire selon la revendication 1 ou 2, **caractérisé en ce que** l'installation (TK-A ; ISDN) est un commutateur de télécommunications privé.

4. Système radio cellulaire selon la revendication 1 ou 2, **caractérisé en ce que** l'installation (TK-A ; ISDN) est un ensemble de circuits d'interface pour un réseau RNIS.

5. Système radio cellulaire selon l'une quelconque des revendications 1 à 4, **caractérisé en ce que** les stations de base (BS1, BS2, BS3, BS4) sont des stations de base d'une installation DECT.

6. Système radio cellulaire selon l'une quelconque des revendications 1 à 5, **caractérisé en ce que** l'installation (TK-A ; ISDN) prévoit une pluralité de caractéristiques de puissance.
